# EUROPEAN PATENT SPECIFICATION

(11) **EP 3 527 783 B1**
(45) Date of publication and mention of the grant of the patent: **10.04.2024**
(21) Application number: 19154299.2
(22) Date of filing: 29.01.2019
(51) Int. Cl.: F01D 5/18, F01D 9/04

(54) **VANE FLOW DIVERTER**
SCHAUFELSTRÖMUNGSUMLENKER
DÉFLECTEUR D'ÉCOULEMENT DE VANNE

(30) Priority: 31.01.2018 US 201815884494
(43) Date of publication of application: 21.08.2019
(73) Proprietor: RTX Corporation, Farmington, CT 06032 (US)
(72) Inventor: ANDERSON, Corey D., East Hartford, CT Connecticut 06118 (US); SPANGLER, Brandon W., Vernon, CT Connecticut 06066 (US)
(74) Representative: Dehns

(56) References cited:
- EP-A1- 3 130 756
- EP-A2- 1 219 784
- EP-A2- 3 228 817
- WO-A1-2015/030926
- US-A- 5 488 825
- US-A- 6 126 389

## Description

### BACKGROUND

This invention relates to cooling for a component of a gas turbine engine, and more particularly to a flow diverter for diverting flow exiting through a platform of a vane.

Gas turbine engines can include a fan for propulsion air and to cool components. The fan also delivers air into an engine core where it is compressed. The compressed air is then delivered into a combustion section, where it is mixed with fuel and ignited. The combustion gas expands downstream and drives turbine blades. Static vanes are positioned adjacent to the turbine blades to control the flow of the products of combustion. The blades and vanes are subject to extreme heat, and thus cooling schemes are utilized for each.

EP 1347152 discloses a prior art vane section according to the preamble of claim 1.

WO 2015/030926 A1, US 5488825 A and US 6126389 A disclose other prior art arrangements.

### SUMMARY

According to the present invention, there is provided a vane section of a gas turbine engine according to claim 1.

In an embodiment according to the foregoing embodiment, the flow diverter includes a plurality of sidewalls, a plurality of endwalls, and an endcap.

In a further embodiment according to any of the foregoing embodiments, the sloped surface is a concave surface.

In a further embodiment according to any of the foregoing embodiments, the flow diverter includes a wall extending inwardly from the platform, and the outlet is an opening in the wall.

In a further embodiment according to any of the foregoing embodiments, a second opening in the platform is configured to provide fluid communication between the channel and the platform cavity.

In a further embodiment according to any of the foregoing embodiments, a second outlet in the flow diverter is configured to provide fluid communication between the diverter cavity and the platform cavity.

In a further embodiment according to any of the foregoing embodiments, the second outlet is configured to provide impingement flow on the rail.

In a further embodiment according to any of the foregoing embodiments, the outlet is a first outlet. The first outlet is defined by an elongated slot, and the second outlet is defined by a cylindrical hole.

There is further provided a gas turbine engine according to claim 10.

In an embodiment according to the foregoing embodiment, a fluid source is configured to provide fluid flow through the internal channel, through the opening in the platform, and to the diverter cavity.

In a further embodiment according to any of the foregoing embodiments, the first direction has a major component in a radially inward direction from the internal channel to the platform cavity, and the second direction has a major component in a circumferential direction between a pressure side surface of the platform and a suction side surface of the platform.

In a further embodiment according to any of the foregoing embodiments, the first direction has a major component in a radially inward direction from the internal channel to the platform cavity, and the second direction has a major component in an axial direction between a leading edge of the platform and a trailing edge of the platform.

In a further embodiment according to any of the foregoing embodiments, the platform cavity is bound by a support inward of the platform.

In a further embodiment according to any of the foregoing embodiments, a rotor section is axially spaced from the vane section with respect to an engine central longitudinal axis. The support includes an orifice configured to provide fluid communication between the platform cavity and a pressurized cavity provided at least partially by the rotor section.

In a further embodiment according to any of the foregoing embodiments, the flow diverter includes a plurality of sidewalls, a plurality of endwalls, and an endcap, and the outlet is provided by an opening in one of the plurality of sidewalls.

These and other features disclosed herein can be best understood from the following specification and drawings, the following of which is a brief description.

### BRIEF DESCRIPTION OF THE DRAWINGS

Figure 1 schematically illustrates an example gas turbine engine.
Figure 2 shows an example section of a gas turbine engine.
Figure 3 schematically illustrates a fluid flow through a portion of another example section of a gas turbine engine.
Figure 4 illustrates an example flow diverter.
Figure 5 schematically illustrates a flow a cross sectional view of the example flow diverter of Figure 4.
Figure 6 illustrates another example flow diverter.
Figure 7 illustrates another example flow diverter.
Figure 8 schematically illustrates a flow through a cross sectional view of another example flow diverter.
Figure 9 schematically illustrates a flow through a cross sectional view of another example flow diverter.
Figure 10 illustrates another example flow diverter.
Figure 11 illustrates another example flow diverter.
Figure 12 illustrates another example flow diverter.
Figure 13 illustrates another example flow diverter.
Figure 14 illustrates an example platform.
Figure 15 schematically illustrates an example fluid flow scheme utilizing the example platform of Figure 14.
Figure 16 schematically illustrates another example fluid flow scheme utilizing the example platform of Figure 14.

### DETAILED DESCRIPTION

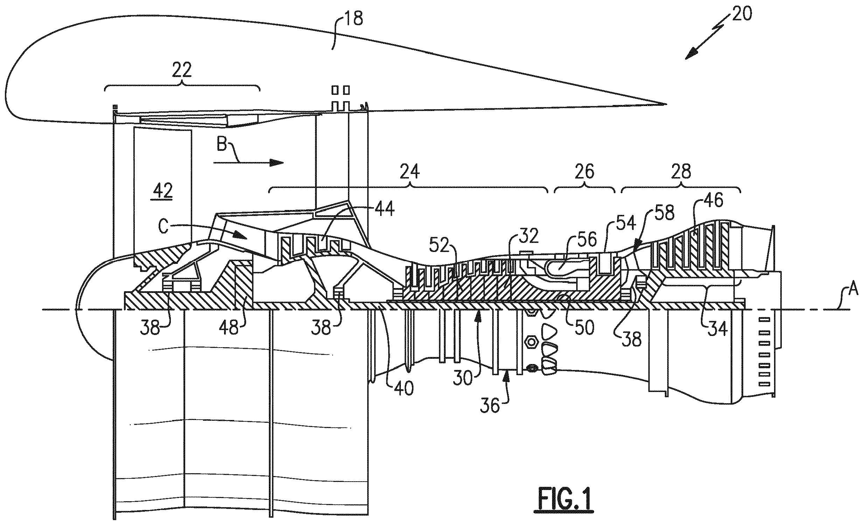

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 18, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction read [(Tram °R) / (518.7 °R)]^0.5 (where R = K x 9/5). The "Low corrected fan tip speed" as disclosed herein according to one non-limiting embodiment is less than about 1150 ft / second (350.5 meters/second).

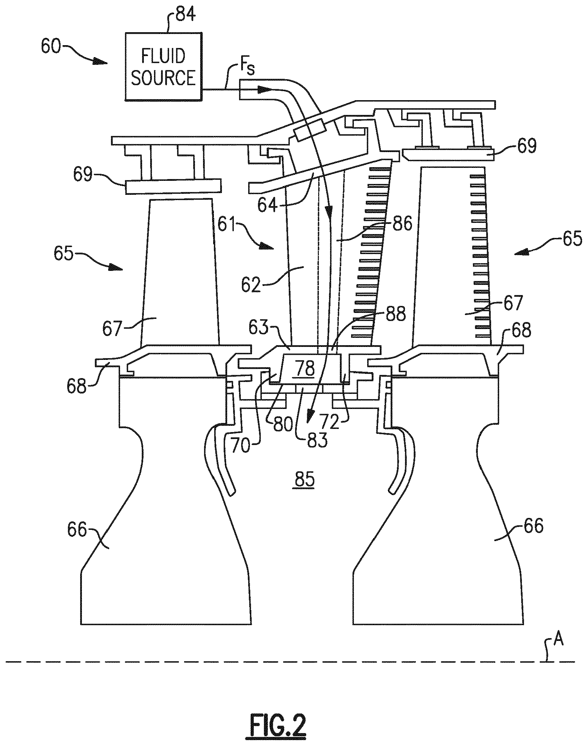

Figure 2 schematically illustrates providing fluid, such as cooling air, to a vane section 61 in a turbine section 60 of a gas turbine engine, such as a portion of the turbine section 28 of the engine 20 of Figure 1. Although a turbine section is disclosed as an example, the teachings of this disclosure may also benefit a compressor section. In this example, the section 60 includes one or more vane sections 61, each having an airfoil section 62 extending between an inner platform 63 and an outer platform 64. The vane section 61 may be spaced axially from one or more rotor sections 65. The rotor sections 65 may each include a rotor disk 66 carrying one or more blades 67 extending from a platform 68 and for rotation about the engine central longitudinal axis A. The rotor sections 65 may include a blade outer air seal 69 ("BOAS") radially outward of the blades 67.

The vane section 61 includes a platform 63 having a forward rail 70 and an aft rail 72 extending inwardly from the platform 63, the example being in the radially inward direction with respect to the engine central longitudinal axis A. The platform 63 and rails 70, 72 define a platform cavity 78. A fluid source 84 communicates fluid flow F_{S} through the outer platform 64, through an internal channel 86 of the airfoil section 62, through an opening 88 in the platform 63 aligned with the channel 86, and into the platform cavity 78. In the example, the fluid may then exit the platform cavity 78 through an orifice 83 in a support 80, which is a seal in one non-limiting example, radially inward of the platform 63 and providing a radially inner boundary of the platform cavity 78. The fluid may exit through the orifice 83 to the pressurized cavity 85 between adjacent rotor disks 66. Although examples in this disclosure are directed to the inner platform 63, the outer platform 64 may also benefit from the teachings herein, such as in an arrangement where fluid is provided outwardly through the platform 63, through the channel 86, and through the outer platform 64.

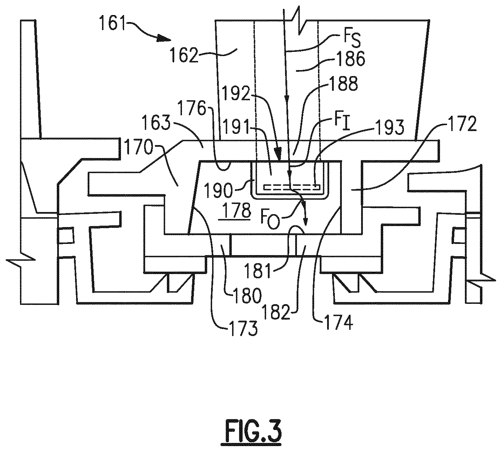

Figure 3 schematically illustrates a fluid F_{S} flowing through a portion of an example vane section 161. In this disclosure, like reference numerals designate like elements where appropriate, and reference numerals with the addition of one-hundred or multiples thereof designate modified elements that are understood to incorporate the same features and benefits of the corresponding original elements. A flow diverter 190 (shown schematically) is within the platform cavity 178 and extends radially inwardly from the platform 163. The flow diverter 190 defines a diverter cavity 191. An inlet 192 provides fluid communication between the opening 188 in the platform 163 and the diverter cavity 191. An outlet 193 provides fluid communication between the diverter cavity 191 and the platform cavity 178. The flow diverter 190 is configured to receive fluid flow F_{I} in a first direction through the inlet 192 and to expel fluid flow F_{O} in a second, different direction through the outlet 193 and into the platform cavity 178. The diverter cavity 191 is provided by the enclosure of the flow diverter 190 inward of the undersurface 176 of the platform 163 and in fluid communication with the channel 186 through the opening 188 in the platform 163. The example flow diverter 190 redirects all or a portion of the fluid exiting the opening 188 to be utilized to improve cooling of features of the platform 163 or to improve boundary conditions within the platform cavity 178. The cavity 178 is provided by an inner or aft face 173 of the rail 170, an inner or forward face 174 of the rail 172, the undersurface 176 of the platform 163 opposite the airfoil portion 162, and an outer surface 181 of an annular main body portion 182 of the support 180.

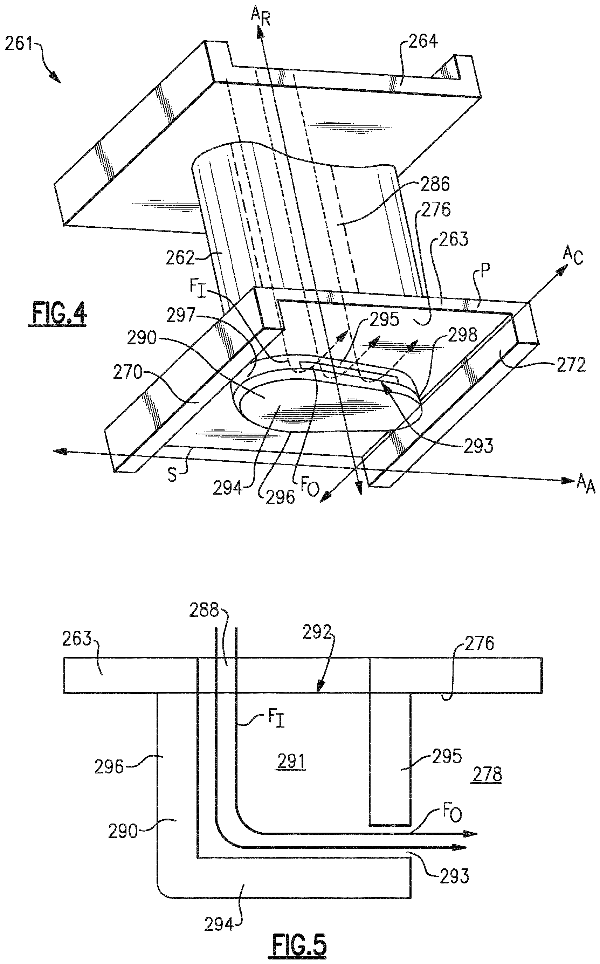

Figure 4 illustrates an example flow diverter 290 in a vane section 261 configured to receive a fluid flow F_{I} and expel a fluid flow F_{O}. In the examples herein, the radial direction is defined along the axis A_{R} from the channel 286 to the platform cavity 278. The axial direction is defined along the axis A_{A} from a leading edge rail 270 to a trailing edge rail 272. The circumferential direction is defined along the axis A_{C} from a pressure side surface P of the platform 263 to a suction side surface S of the platform 263. As used herein, a fluid flow will have a major component in a direction if the directional component of the flow is within 30 degrees of that direction axis. For example, a flow having a major component in a radial direction has a radial component within 30 degrees of the axis A_{R}. In the example, the flow F_{I} has a major component in the radially inward direction, and the fluid flow F_{O} has a major component in a circumferential direction. Other directions for F_{O} are contemplated, such as having a major component in the axially aft direction toward the rail 272, a major component in the axially forward direction toward the rail 270, or a major component in the radially outward direction toward the undersurface 276.

The example flow diverter 290 is provided by a first sidewall 295, a second sidewall 296, a leading edge endwall 297, and a trailing edge endwall 298 extending outwardly from an endcap 294 to the platform 263. The endcap 294, first sidewall 295, second sidewall 296, leading edge endwall 297, and trailing edge endwall 298 are provided as one monolithic piece.

In some examples, the first sidewall 295, the second sidewall 296, the leading edge endwall 297, and the trailing edge endwall 298 form an airfoil-shaped structure complementary to the shape of the airfoil section 262. The example outlet 293 is provided in the first sidewall 295, but may alternatively or additionally be provided in the second sidewall 296, the leading edge endwall 297, the trailing edge endwall 298, or the endcap 294. The example outlet 293 is an axially elongated slot in the sidewall 295, but other shapes of openings, including but not limited to cylindrical holes, are contemplated.

Figure 5 schematically illustrates fluid flow through a cross section of the flow diverter 290. The inlet 292 receives fluid flow F_{I}, and the outlet 293 expels fluid flow F_{O}. The example inlet 292 is defined by the opening where fluid exits the opening 288 and enters the diverter cavity 291.

Returning to Figure 4, with continued reference to Figure 5, in the example, the first sidewall 295, the second sidewall 296, the leading edge endwall 297, and the trailing edge endwall 298 extend outwardly from the endcap 294 to the platform undersurface 276 to enclose the diverter cavity 291. The endcap 294 radially bounds the diverter cavity 291, the first sidewall 295 and the second sidewall 296 bound the diverter cavity 291 circumferentially, and the leading edge endwall 297 and the trailing edge endwall 298 bound the diverter cavity 291 axially. The inlet 292 is provided by the first sidewall 295, the second sidewall 296, the leading edge endwall 297, and the trailing edge endwall 298 and located opposite the diverter cavity 291 from the endcap 294.

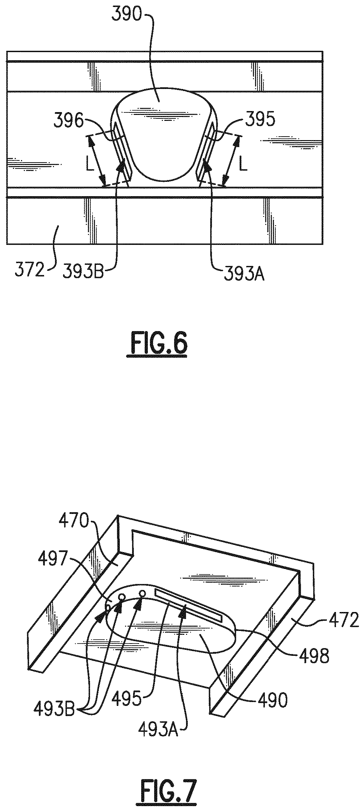

Figure 6 illustrates an example flow diverter 390 providing a first outlet 393A in the first sidewall 395 and a second outlet 393B in the second sidewall 396. Each of the outlet 393A and the outlet 393B is an axially elongated slot, and, in one example, the outlet 393A and the outlet 393B have the same elongated length L. The outlet 393A is configured to expel fluid having a major component in a circumferential direction, and the outlet 393B is configured to expel fluid having a major component in an opposite circumferential direction. The example outlets 393A/393B may expel fluid in a direction having an axially aft component toward the rail 372 as well.

Figure 7 illustrates an example flow diverter 490 providing a first outlet 493A in the first sidewall 495 and one or more outlets 493B in the leading edge endwall 497. The example outlets 493B are cylindrical openings and may provide impingement cooling to the rail 470 in some examples. In some examples, cylindrical openings may alternatively or additionally be provided in the trailing edge endwall 498 to provide impingement cooling to the rail 472.

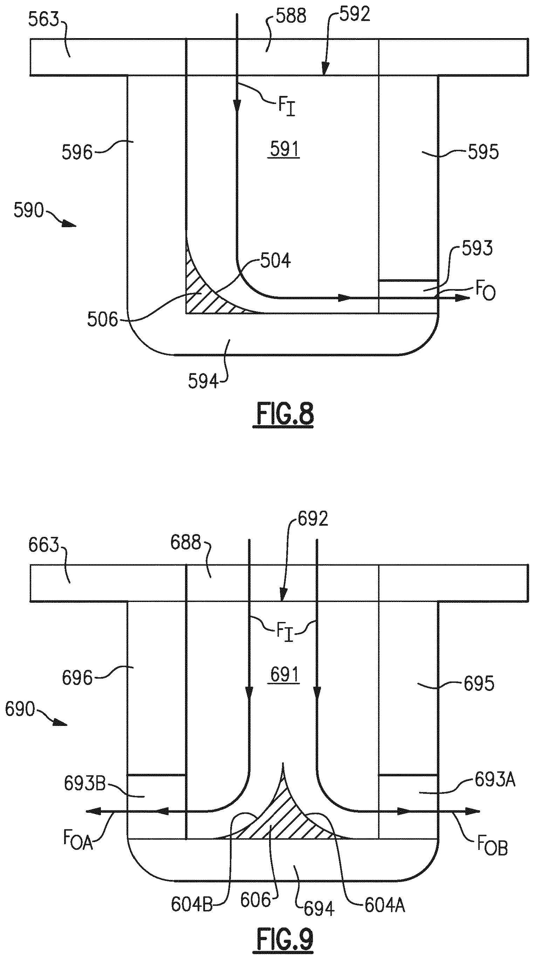

Figure 8 illustrates another example flow diverter 590 having a deflecting surface 504 in the diverter cavity 591 for deflecting the fluid flow Fi out of the outlet 593 that enters the diverter cavity 591 through the inlet 592. In the example, the fluid F_{I} flows through the opening 588 and enters the diverter cavity 591 through the inlet 592 in a direction having a major radially inward component. The deflecting surface 504 directs the fluid in a direction having a major circumferential component to flow Fo out of the outlet 593. In another example, the flow Fo may be in a direction having a major component in the axial direction.

The example deflecting surface 504 is a concave surface curving toward the outlet 593 as it extends toward the endcap 594. Other sloped surfaces may be utilized. The example deflecting surface 504 is provided by a cast part 506 that is cast as monolithic with the sidewall 596, the endcap 594 or both. The deflecting surface 504 may condition fluid flowing across it. The deflecting surface 504 is configured to smoothly transition the flow from a first direction to a second direction, reducing turbulent eddies in areas such as corners of the flow diverter cavity 591 that cause high pressure loss.

Figure 9 illustrates another example flow diverter 690 generally similar to the flow diverter 590, but having two deflecting surfaces 604A/604B for diverting flow out of respective outlets 693A/693B. In the example, the fluid F_{I} enters the diverter cavity 691 through the inlet 692 in a direction having a major radially inward component, and the deflecting surfaces 604A/604B direct the fluid toward the respective outlets 693A/693B. The outlet 693A is configured to expel fluid F_{OA} having a major component in a circumferential direction, and the outlet 693B is configured to expel fluid F_{OB} having a major component in an opposite circumferential direction. In another example, the flows F_{OA}/F_{OB} are in directions having major components in opposing axial directions.

The example deflecting surfaces 604A/604B are concave surfaces curving toward their respective outlets 693A/693B as they extend inward toward the endcap 694, but other sloped surfaces may be utilized. The example deflecting surfaces 604A/604B are provided by a cast part 606 that is cast as monolithic with the endcap 694.

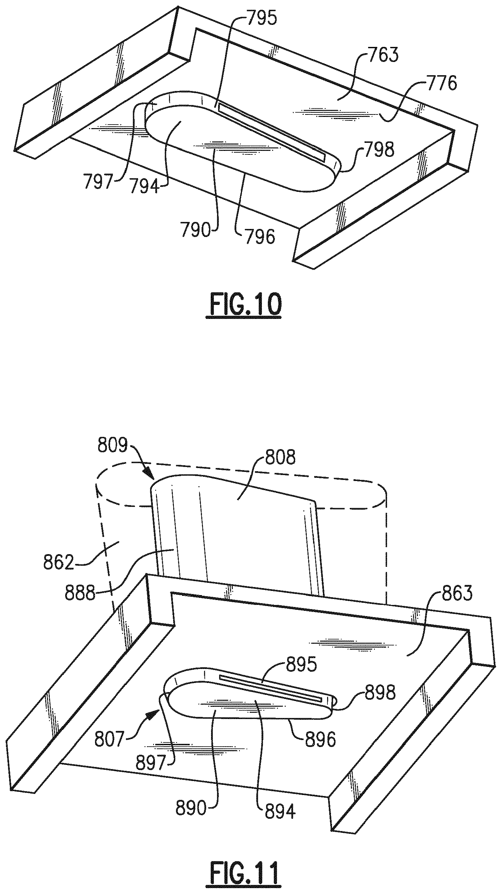

Figure 10 illustrates an example flow diverter 790 cast as part of the platform 763. The first sidewall 795, second sidewall 796, leading edge endwall 797, and trailing edge endwall 798 are monolithic with and extending between the platform undersurface 776 and the endcap 794.

Figure 11 illustrates another example flow diverter 890 provided by a radially inner portion 807 of a baffle 808. A radially outer portion 809 of the baffle 808 is internal to the airfoil section 862. The baffle 808 extends through an opening 888 in the platform 863, such that the inner portion 807 is inward of the platform 863 and opposite the platform 863 from the outer portion 809. The first sidewall 895, second sidewall 896, leading edge endwall 897, and trailing edge endwall 898 of the flow diverter 890 are provided by inward extensions of the outer walls of the baffle 808 at the inner portion 807. An endcap 894 is provided at the inner end of the baffle 808. The baffle 808 has a hollow interior (not shown), such that the inner portion 807 provides a diverter cavity in fluid communication with the interior of the outer portion 809.

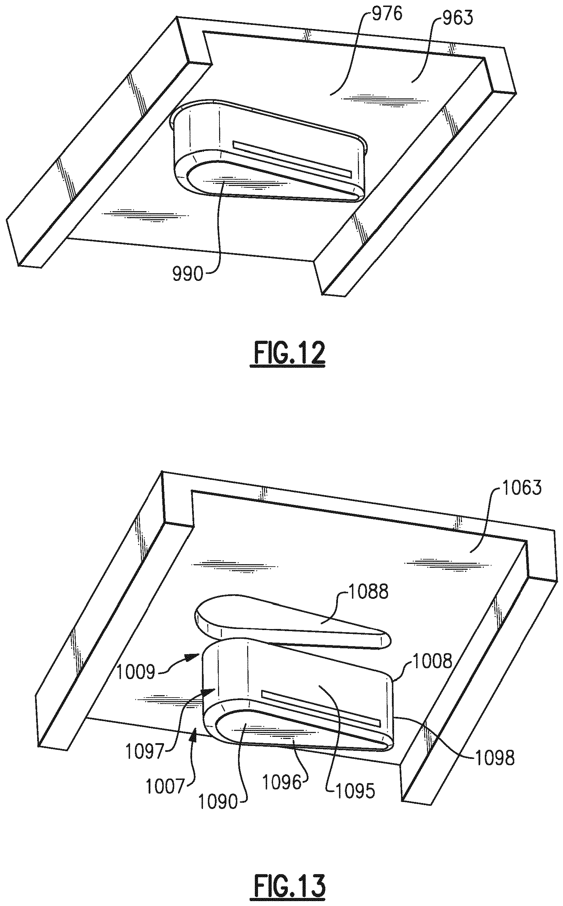

Figure 12 illustrates another example flow diverter 990 that is a separate component attached to the undersurface 976 of the platform 963, such as by welding. Other methods for attaching the flow diverter 990 to the undersurface 976 of the platform 963 may be utilized.

Figure 13 illustrates another example flow diverter 1090 provided by an inner portion 1007 of an insertable component 1008 having an outer portion 1009 configured to be received within the opening 1088 in the platform 1063. The outer portion 1009 and inner portion 1007 are hollow (not shown), such that the inner portion 1007 provides a diverter cavity in fluid communication with the interior of the outer portion 1009. The outer portion 1009 may be an outward extension of the first sidewall 1095, second sidewall 1096 and leading edge endwall 1097, and trailing edge endwall 1098 and may have a complementary cross sectional shape with the opening 1088.

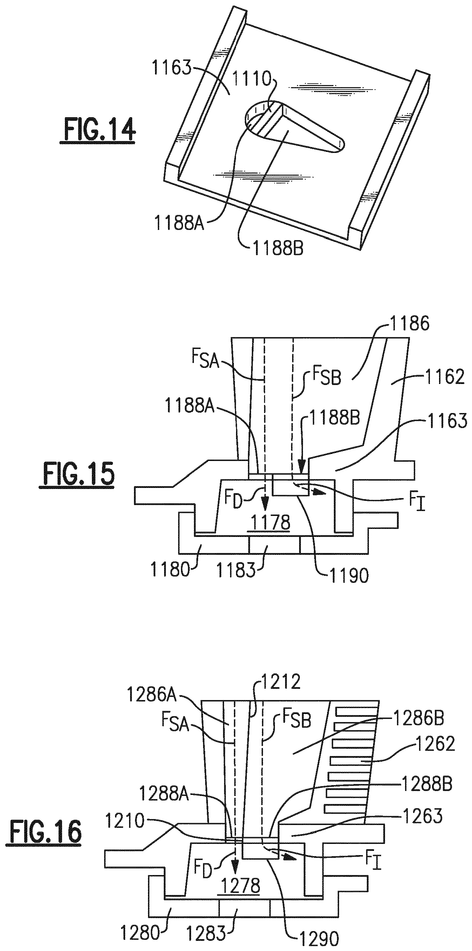

Figure 14 illustrates a platform 1163 that may be utilized with one or more example flow diverters disclosed herein. As shown, two openings 1188A and 1188B are provided in the platform 1163 and separated by a rib 1110.

Figure 15 schematically illustrates an example diverter 1190 positioned to be aligned with one of the openings 1188A/1188B in the platform 1163 shown in Figure 14. In the example shown, the flow diverter 1190 is aligned with the opening 1188B, but opening 1188A is not covered. Alternatively, the flow diverter 1190 may be aligned with the opening 1188A. As another alternative, a single opening may be provided, and the flow diverter may only partially cover the opening. The example diverter 1190 receives a fluid flow portion F_{SB} flowing out of the opening 1188B and into the diverter cavity 1191 (flow shown as F_{I}). The diverter 1190 is not aligned with the opening 1188A, such that a fluid flow portion F_{SA} flowing through the channel 1186 flows directly out of the opening 1188A and into the platform cavity 1178 (flow shown as F_{D}). In some examples, the fluid flow F_{D} may exit the platform cavity 1178 through an orifice 1183 in the support 1180 inward of the platform 1163.

Figure 16 schematically illustrates a similar arrangement to that of Figure 15, except that the channel 1286 is divided into channel parts 1286A and 1286B separated by a partition 1212, and the channel part 1286A receives the fluid flow F_{SA} and the channel part 1286B receives the fluid flow F_{SB}. The partition 1212 may be aligned with the rib 1210 between the openings 1288A and 1288B.

It should be understood that relative positional terms such as "forward," "aft," "upper," "lower," "above," "below," and the like are with reference to the normal operational attitude of the vehicle and should not be considered otherwise limiting.

Although the different examples have the specific components or features shown in the illustrations, embodiments of this disclosure are not limited to those particular combinations. It is possible to use some of the components or features from one of the examples in combination with features or components from another one of the examples.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. A vane section (161) of a gas turbine engine (20) comprising:
a platform (163);
an airfoil (162) extending outwardly from the platform (163) and having an internal channel (186) communicating with an opening (188) in the platform (163);
at least one rail (170, 172) extending inwardly from the platform (163) such that a surface of the platform (163) opposite the airfoil (162) and the at least one rail (170, 172) at least partially define a platform cavity (178); and
a flow diverter (190) extending inwardly of the platform (163) within the platform cavity (178) and defining a diverter cavity (191), an inlet (192) configured to receive fluid (F_{I}) flowing in a first direction from the opening (188) in the platform (163) to the diverter cavity (191), and an outlet (193) configured to expel fluid (F_{O}) from the diverter cavity (191) to the platform cavity (178) in a second direction different from the first direction;
**characterised by**:
a sloped surface (504; 604) disposed in the diverter cavity (191) configured to divert fluid from the first direction to the second direction, wherein the flow diverter (191) is monolithic with the platform (163).

2. The vane section (161) as recited in claim 1, wherein the flow diverter (190) includes a plurality of sidewalls (295, 296), a plurality of endwalls (297, 298), and an endcap (294).

3. The vane section (161) as recited in claim 2, wherein the outlet (193) is provided by an opening in one of the plurality of sidewalls (295, 296).

4. The vane section (161) as recited in claim 1, 2 or 3, wherein the sloped surface (504, 604) is a concave surface.

5. The vane section (161) as recited in claim 1, wherein the flow diverter (191) includes a wall (295, 296, 297, 298) extending inwardly from the platform (163), and the outlet (193) is an opening in the wall (295, 296, 297, 298).

6. The vane section (161) as recited in any preceding claim, comprising a second opening (1188A) in the platform (163) configured to provide fluid communication between the channel (186) and the platform cavity (178).

7. The vane section (161) as recited in any preceding claim, comprising a second outlet (493B) in the flow diverter (190) configured to provide fluid communication between the diverter cavity (191) and the platform cavity (178).

8. The vane section (161) as recited in claim 7, wherein the second outlet (493B) is configured to provide impingement flow on the at least one rail (70, 72).

9. The vane section (161) as recited in claim 7 or 8, wherein the outlet (193) is a first outlet, the first outlet is defined by an elongated slot, and the second outlet (493B) is defined by a cylindrical hole.

10. A gas turbine engine (20), comprising:
a turbine section (28); and
at least one vane section (161) of any preceding claim within the turbine section (28).

11. The gas turbine engine (20) as recited in claim 10, comprising a fluid source (84) configured to provide fluid flow (Fs) through the internal channel (186), through the opening (188) in the platform (163), and to the diverter cavity (191).

12. The gas turbine engine (20) as recited in claim 10 or 11, wherein the first direction has a major component in a radially inward direction from the internal channel (186) to the platform cavity (178), and the second direction has a major component either in a circumferential direction between a pressure side surface of the platform (163) and a suction side surface of the platform (163), or in an axial direction between a leading edge of the platform (163) and a trailing edge of the platform (163).

13. The gas turbine engine (20) as recited in claim 10, 11 or 12, wherein the platform cavity (178) is bound by a support (180) inward of the platform (163).

14. The gas turbine engine (20) as recited in claim 13, comprising:
a rotor section (65) axially spaced from the vane section (161) with respect to an engine central longitudinal axis (A), wherein the support (180) includes an orifice (83) configured to provide fluid communication between the platform cavity (178) and a pressurized cavity (85) provided at least partially by the rotor section (65).

## Patentansprüche

1. Schaufelabschnitt (161) eines Gasturbinentriebwerks (20), Folgendes umfassend:
eine Plattform (163);
ein Tragflächenprofil (162), das sich von der Plattform (163) nach außen erstreckt und einen inneren Kanal (186) aufweist, der mit einer Öffnung (188) in der Plattform (163) in Verbindung steht;
mindestens eine Schiene (170, 172), die sich von der Plattform (163) nach innen erstreckt, derart dass eine Oberfläche der Plattform (163) gegenüber dem Tragflächenprofil (162) und die mindestens eine Schiene (170, 172) mindestens teilweise einen Plattformhohlraum (178) definieren; und
einen Strömungsumlenker (190), der sich von der Plattform (163) innerhalb des Plattformhohlraums (178) nach innen erstreckt und einen Umlenkerhohlraum (191) definiert, einen Einlass (192), der konfiguriert ist, um Fluid (F_{I}), das in einer ersten Richtung von der Öffnung (188) in der Plattform (163) zu dem Umlenkerhohlraum (191) fließt, aufzunehmen, und einen Auslass (193), der konfiguriert ist, um Fluid (F_{O}) aus dem Umlenkerhohlraum (191) in den Plattformhohlraum (178) in einer zweiten Richtung, die sich von der ersten Richtung unterscheidet, auszustoßen;
**gekennzeichnet durch**:
eine geneigte Oberfläche (504; 604), die in dem Umlenkerhohlraum (191) angeordnet ist und konfiguriert ist, um Fluid aus der ersten Richtung in die zweite Richtung abzulenken, wobei der Strömungsumlenker (191) monolithisch mit der Plattform (163) ist.

2. Schaufelabschnitt (161) nach Anspruch 1, wobei der Strömungsumlenker (190) eine Vielzahl von Seitenwänden (295, 296), eine Vielzahl von Stirnwänden (297, 298) und eine Endkappe (294) aufweist.

3. Schaufelabschnitt (161) nach Anspruch 2, wobei der Auslass (193) durch eine Öffnung in einer der Vielzahl von Seitenwänden (295, 296) bereitgestellt wird.

4. Schaufelabschnitt (161) nach Anspruch 1, 2 oder 3, wobei die geneigte Fläche (504, 604) eine konkave Oberfläche ist.

5. Schaufelabschnitt (161) nach Anspruch 1, wobei der Strömungsumlenker (191) eine Wand (295, 296, 297, 298) beinhaltet, die sich von der Plattform (163) nach innen erstreckt, und der Auslass (193) eine Öffnung in der Wand (295, 296, 297, 298) ist.

6. Schaufelabschnitt (161) nach einem der vorangehenden Ansprüche, umfassend eine zweite Öffnung (1188A) in der Plattform (163), die konfiguriert ist, um eine Fluidverbindung zwischen dem Kanal (186) und dem Plattformhohlraum (178) bereitzustellen.

7. Schaufelabschnitt (161) nach einem der vorangehenden Ansprüche, umfassend einen zweiten Auslass (493B) in dem Strömungsumlenker (190), der konfiguriert ist, um eine Fluidverbindung zwischen dem Umlenkerhohlraum (191) und dem Plattformhohlraum (178) bereitzustellen.

8. Schaufelabschnitt (161) nach Anspruch 7, wobei der zweite Auslass (493B) konfiguriert ist, um eine Aufprallströmung auf der mindestens einen Schiene (70, 72) bereitzustellen.

9. Schaufelabschnitt (161) nach Anspruch 7 oder 8, wobei der Auslass (193) ein erster Auslass ist, der erste Auslass durch einen länglichen Schlitz definiert ist und der zweite Auslass (493B) durch ein zylindrisches Loch definiert ist.

10. Gasturbinentriebwerk (20), Folgendes umfassend:
einen Turbinenabschnitt (28); und
mindestens einen Schaufelabschnitt (161) nach einem der vorhergehenden Ansprüche innerhalb des Turbinenabschnitts (28) .

11. Gasturbinentriebwerk (20) nach Anspruch 10, umfassend eine Fluidquelle (84), die konfiguriert ist, um eine Fluidströmung (F_{S}) durch den inneren Kanal (186), durch die Öffnung (188) in der Plattform (163) und zu dem Umlenkerhohlraum (191) bereitzustellen.

12. Gasturbinentriebwerk (20) nach Anspruch 10 oder 11, wobei die erste Richtung eine Hauptkomponente in einer radial nach innen gerichteten Richtung von dem inneren Kanal (186) zu dem Plattformhohlraum (178) aufweist, und die zweite Richtung eine Hauptkomponente entweder in einer Umfangsrichtung zwischen einer druckseitigen Oberfläche der Plattform (163) und einer saugseitigen Oberfläche der Plattform (163) oder in einer axialen Richtung zwischen einer Vorderkante der Plattform (163) und einer Hinterkante der Plattform (163) aufweist.

13. Gasturbinentriebwerk (20) nach Anspruch 10, 11 oder 12, wobei der Plattformhohlraum (178) durch einen Träger (180) innerhalb der Plattform (163) begrenzt ist.

14. Gasturbinentriebwerk (20) nach Anspruch 13, Folgendes umfassend:
einen Rotorabschnitt (65), der in Bezug auf eine Triebwerkmittellängsachse (A) axial von dem Schaufelabschnitt (161) beabstandet ist, wobei der Träger (180) eine Öffnung (83) aufweist, die konfiguriert ist, um eine Fluidverbindung zwischen dem Plattformhohlraum (178) und einem unter Druck stehenden Hohlraum (85), der mindestens teilweise von dem Rotorabschnitt (65) bereitgestellt wird, bereitzustellen.

## Revendications

1. Section d'aube (161) d'un moteur à turbine à gaz (20), comprenant :
une plateforme (163) ;
un profil aérodynamique (162) s'étendant vers l'extérieur à partir de la plateforme (163) et ayant un canal interne (186) communiquant avec une ouverture (188) dans la plateforme (163) ;
au moins un rail (170, 172) s'étendant vers l'intérieur à partir de la plateforme (163) de sorte qu'une surface de la plateforme (163) opposée au profil aérodynamique (162) et l'au moins un rail (170, 172) définissent au moins partiellement une cavité de plateforme (178) ; et
un déflecteur d'écoulement (190) s'étendant vers l'intérieur de la plateforme (163) à l'intérieur de la cavité de plateforme (178) et définissant une cavité de déflecteur (191), une entrée (192) conçue pour recevoir un fluide (F_{I}) s'écoulant dans une première direction de l'ouverture (188) dans la plateforme (163) à la cavité de déflecteur (191), et une sortie (193) conçue pour expulser un fluide (F_{O}) de la cavité de déflecteur (191) à la cavité de plateforme (178) dans une seconde direction différente de la première direction ;
**caractérisée par** :
une surface inclinée (504 ; 604) disposée dans la cavité de déflecteur (191) conçue pour dévier un fluide de la première direction vers la seconde direction, le déflecteur d'écoulement (191) étant monolithique avec la plateforme (163) .

2. Section d'aube (161) selon la revendication 1, dans laquelle le déflecteur d'écoulement (190) comporte une pluralité de parois latérales (295, 296), une pluralité de parois d'extrémité (297, 298) et un capuchon d'extrémité (294) .

3. Section d'aube (161) selon la revendication 2, dans laquelle la sortie (193) est fournie par une ouverture dans l'une de la pluralité de parois latérales (295, 296).

4. Section d'aube (161) selon la revendication 1, 2 ou 3, dans laquelle la surface inclinée (504, 604) est une surface concave.

5. Section d'aube (161) selon la revendication 1, dans laquelle le déflecteur d'écoulement (191) comporte une paroi (295, 296, 297, 298) s'étendant vers l'intérieur à partir de la plateforme (163), et la sortie (193) est une ouverture dans la paroi (295, 296, 297, 298).

6. Section d'aube (161) selon une quelconque revendication précédente, comprenant une seconde ouverture (1188A) dans la plateforme (163) conçue pour assurer une communication fluidique entre le canal (186) et la cavité de plateforme (178) .

7. Section d'aube (161) selon une quelconque revendication précédente, comprenant une seconde sortie (493B) dans le déflecteur d'écoulement (190) conçue pour assurer une communication fluidique entre la cavité de déflecteur (191) et la cavité de plateforme (178).

8. Section d'aube (161) selon la revendication 7, dans laquelle la seconde sortie (493B) est conçue pour fournir un flux d'incidence sur l'au moins un rail (70, 72).

9. Section d'aube (161) selon la revendication 7 ou 8, dans laquelle la sortie (193) est une première sortie, la première sortie est définie par une fente allongée et la seconde sortie (493B) est définie par un trou cylindrique.

10. Moteur à turbine à gaz (20), comprenant :
une section de turbine (28) ; et
au moins une section d'aube (161) selon une quelconque revendication précédente à l'intérieur de la section de turbine (28).

11. Moteur à turbine à gaz (20) selon la revendication 10, comprenant une source de fluide (84) conçue pour fournir un flux de fluide (F_{S}) à travers le canal interne (186), à travers l'ouverture (188) dans la plateforme (163), et vers la cavité de déflecteur (191).

12. Moteur à turbine à gaz (20) selon la revendication 10 ou 11, dans lequel la première direction a une composante principale dans une direction radialement vers l'intérieur du canal interne (186) à la cavité de plateforme (178), et la seconde direction a une composante principale soit dans une direction circonférentielle entre une surface côté pression de la plateforme (163) et une surface côté aspiration de la plateforme (163), soit dans une direction axiale entre un bord d'attaque de la plateforme (163) et un bord de fuite de la plateforme (163).

13. Moteur à turbine à gaz (20) selon la revendication 10, 11 ou 12, dans lequel la cavité de plateforme (178) est délimitée par un support (180) vers l'intérieur de la plateforme (163).

14. Moteur à turbine à gaz (20) selon la revendication 13, comprenant :
une section de rotor (65) espacée axialement de la section d'aube (161) par rapport à un axe longitudinal central (A) du moteur, dans lequel le support (180) comporte un orifice (83) conçu pour assurer une communication fluidique entre la cavité de plateforme (178) et une cavité sous pression (85) fournie au moins partiellement par la section de rotor (65).
